# EUROPEAN PATENT SPECIFICATION

(11) **EP 3 657 140 B1**
(45) Date of publication and mention of the grant of the patent: **01.03.2023**
(21) Application number: 19210422.2
(22) Date of filing: 20.11.2019
(51) Int. Cl.: G01F 15/00

(54) **DISTRIBUTION MANIFOLD**
VERTEILERBLOCK
COLLECTEUR DE DISTRIBUTION

(30) Priority: 20.11.2018 DE 102018129208
(43) Date of publication of application: 27.05.2020
(73) Proprietor: Johnson Electric International AG, 3280 Murten (CH)
(72) Inventor: Brueckner, Stephan, Hong Kong (HK); Schwarze, Wolfram, Hong Kong (HK); Endt, Joerg, Shatin, N.T. (HK)
(74) Representative: Hocking, Adrian Niall

(56) References cited:
- CN-U- 207 961 629
- JP-A- 2017 180 612
- US-A- 4 984 448
- US-A1- 2009 114 297
- US-A1- 2012 085 434

## Description

### FIELD OF THE INVENTION

The present invention relates to a distribution manifold for a valve for installation in gas meters, in particular for industrial gas meters, to be used in large gas appliances or gas supply devices with inlet openings larger than or equal to 2 inches (0.0508m; 1 inch=0.0254 m).

### BACKGROUND OF THE INVENTION

For industrial gas meters used in large gas appliances or gas supply devices, smart gas meters are commonly used. The gas meters generally contain two alternatingly filling elastic measuring chambers within a measuring mechanism housing. The measuring mechanism housing is provided with a gas inlet and a gas outlet for measuring the volume of the flowing gas, together with their control system, a counting mechanism, components for remote retrieval of the meter reading as well as components for remote turn-on and remote shut-off of the gas flow. Remote control is necessary, e.g. for prepayment systems or for decommissioning the gas meters remotely at the respective gas utility company. This is done by means of a shut-off valve, to be dimensioned of appropriate size, downstream of the gas inlet and whose actuator is to be electrically actuated.

For a compact construction, reduction of operating noise and increasing the manipulation safety, the shut-off valve together with its integrated power storage unit is usually accommodated inside the housing of the industrial gas meter. This results in requirements of the smallest possible size for the shut-off valve, high operational reliability and long-term maintenance-freedom, in particular also including long-term battery-powered operation.

Specifically, the latter requires the lowest possible energy consumption for actuating the shut-off valve and, improved protection against sparking at the actuator of the shut-off valve is also necessary. Industrial gas meters in large gas appliances or gas supply devices usually exceed the legally permitted limit values for the maximally applicable electrical energy less than or equal to 320 µJ for natural gas, which necessarily results in the implementation of additional electronic protection circuits in order to minimize the risk of ignition within the explosive atmosphere inside the device. While the additionally disposed protection circuits largely reduce this risk, it cannot not be excluded a 100%. US20120085434 discloses an apparatus and method for controlling the flow of fluids. JP2017180612 discloses an evaluation device of a hydrogen gas dispenser.

### SUMMARY OF THE INVENTION

Accordingly, there is a desire for an improved distribution manifold.

In one aspect, there is provided a gas meter as claimed in claim 1.

Preferably, each valve is designed to be opened and closed by a shut-off body actuated by a motor-driven reduction gear unit.

Preferably, each valve is actuated separately in simultaneously so that valves is in parallel operation.

Preferably, the distribution manifold having at least two gas outlet nozzles disposed on it is cuboid.

Preferably, the distribution manifold having at least two gas outlet nozzles disposed on it is cylindrical.

Preferably, the at least two gas outlet nozzles are serially disposed on the distribution manifold and pointed to one direction.

Preferably, the at least two gas outlet nozzles are disposed on the distribution manifold in a radially distributed manner.

Preferably, the at least two gas outlet nozzles are disposed on the distribution manifold at a right angle to a direction of gas inlet flow

Preferably, the distribution manifold is a modular construction including several serially disposed individual distribution manifolds connected with each other in a gastight manner, each individual distribution manifold includes a gas outlet nozzle.

Preferably, a structure of each valve on each gas outlet nozzle is same.

Preferably, the valve on each of the gas outlet nozzles are connected in parallel to a same actuation circuit.

Below, embodiments of the present disclosure will be described in detail with reference to the accompanying drawings.

### BRIEF DESCRIPTION OF THE DRAWINGS

Fig. 1 is a perspective view of a cylindrical distribution manifold in a gas meter according to one embodiment of the present invention.
Figs. 2-7 are perspective views of the distribution manifold according to different embodiments of the present invention.
Fig. 8 is a perspective view of a valve of the distribution manifold according to one embodiment of the present invention.

### DETAILED DESCRIPTION OF THE PREFERRED EMBODIMENTS

The technical solutions of the embodiments of the present invention will be clearly and completely described as follows with reference to the accompanying drawings. Apparently, the embodiments as described below are merely part of, rather than all, embodiments of the present invention. Based on the embodiments of the present invention, any other embodiment obtained by a person skilled in the art without paying any creative effort shall fall within the protection scope of the present invention.

It is noted that, when a component is described to be "fixed" to another component, it can be directly fixed to the another component or there may be an intermediate component. When a component is described to be "connected" to another component, it can be directly connected to the another component or there may be an intermediate component. When a component is described to be "disposed" on another component, it can be directly disposed on the another component or there may be an intermediate component.

Unless otherwise specified, all technical and scientific terms have the ordinary meaning as commonly understood by people skilled in the art. The terms used in this disclosure are illustrative rather than limiting. The term "and/or" used in this disclosure means that each and every combination of one or more associated items listed are included.

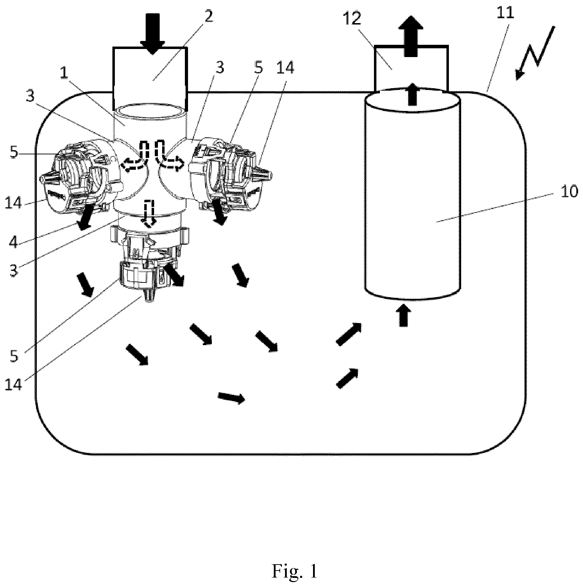

Fig. 1 illustrates a gas meter 11 incorporating a cylindrical distribution manifold 1. The distribution manifold 1 includes one large gas inlet opening 2, three small gas outlet nozzles 3 and three associated valves 5 disposed on the gas outlet nozzles 3. In at least one embodiment, the gas meter is used for industry and the gas meter is an industrial gas meter. The gas inlet opening 2 of the gas meter has, e.g., a gas pipe connection of 2 inches (0.0508m; 1 inch=0.0254 m), resulting in a specific cross-section for the inlet gas flow. Each of the valves 5 has a gas outlet opening 4 that is dimensioned such that the sum of the opening cross-sections thereof is sufficient for the required gas volume flow rate (black arrows as shown in Fig. 1) with a 2-inch (2 inches=0.0508m) connection.

A gas meter outlet 12 has a flow sensor 10 inside at an appropriate location to measure and check the volume flow. The valves 5 are provided with appropriate electrical connecting cables (not drawn), connected in parallel and provided with a valve cap 14. The connecting cables are guided in a gastight manner from the gas-charged space out to an external control unit. Each valve 5 is individually controllable and can be opened or closed individually.

The essential advantage of this innovative distribution manifold 1 is that no electronic protection circuit is any longer needed due to the low electrical energy introduced into the explosive natural gas atmosphere (per valve 5 always less than or equal to 320 µJ for natural gas), which results in considerable manufacturing savings and cost benefits.

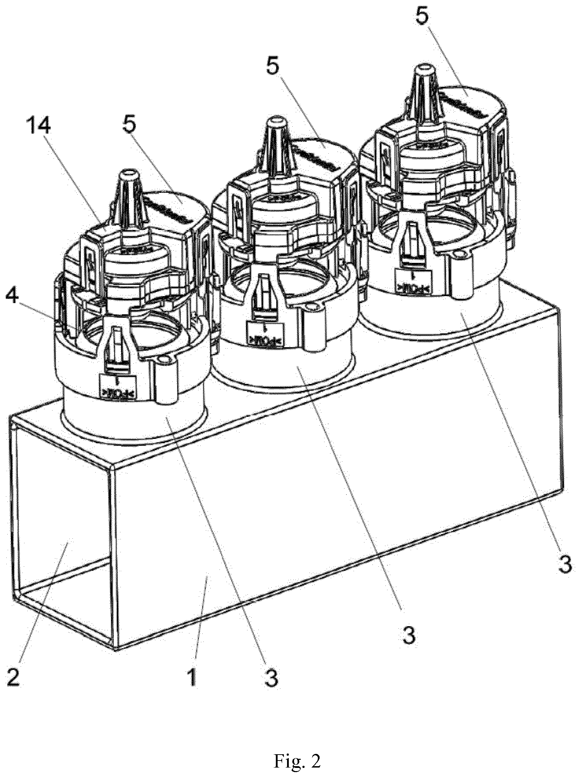

Fig. 2 shows an embodiment suitable for particular application cases and featuring a cuboid distribution manifold 1 (closed against gas inlet opening 2) having three cylindrical gas outlet nozzles 3 serially disposed in a linear manner, with one small valve 5 disposed on each, pointing in one direction. The cross-section of the distribution manifold 1 can optionally be square, rectangular or also elliptical.

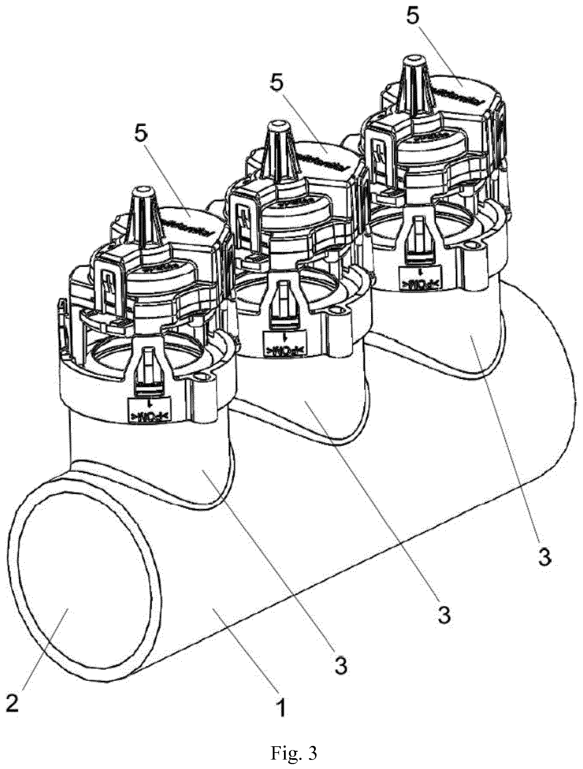

Fig. 3 shows a cylindrical distribution manifold 1 having a large gas inlet opening 2 with a circular cross-section and three serially disposed gas outlet nozzles 3 with one small valve 5 disposed on each, pointing in one direction. The distribution manifold 1 is closed against the gas inlet opening 2. If needed, a further small gas outlet nozzle with a small valve 5 could be connected here.

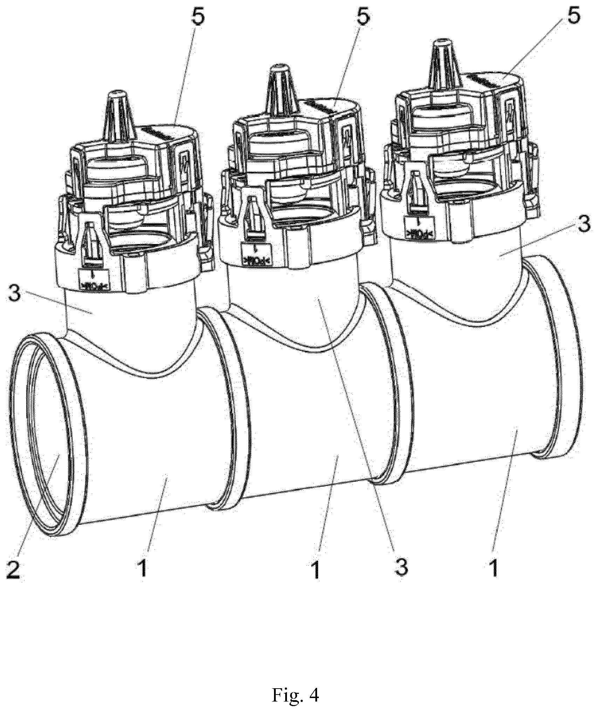

In another possible embodiment according to Fig. 4, the distribution manifold 1 according to the invention is of a modular construction, that means, it is assembled from several identically constructed modules. In at least one embodiment, there are three individual distribution manifold modules, the last of which is provided with a gastight closure on one side. If needed, more than three modules may be assembled into one distribution manifold 1. The modules are cylindrical and disposed linearly, pointing in one direction. However, they may also be assembled circumferentially offset from each other such that the small valves 5 with their gas outlet openings 4 point in different directions, in order to allow an optimal flow behaviour of the gas inside the gas meter 11.

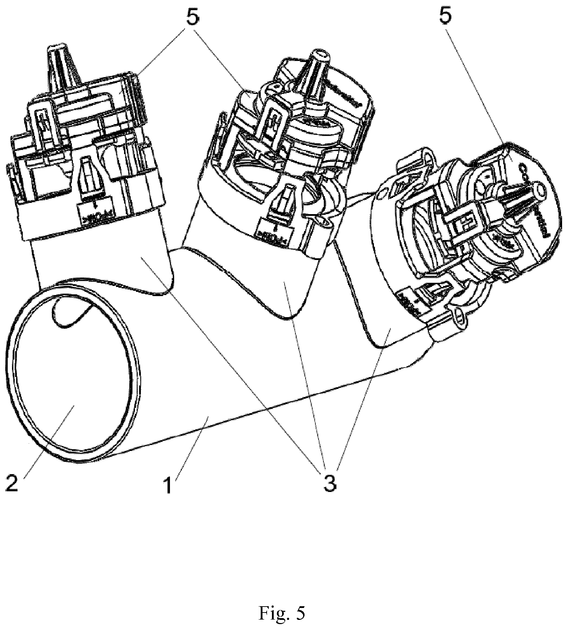

Fig. 5 again shows a one-piece cylindrical distribution manifold 1 having three serially disposed, circumferentially offset cylindrical gas outlet nozzles 3 with one small valve 5 each, pointing in different directions.

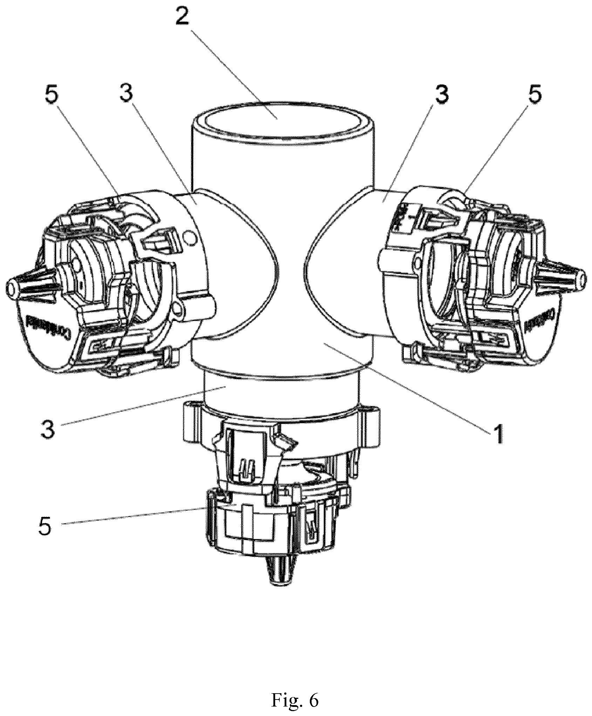

Another arrangement of the gas outlet nozzle 3 on the basic body of distribution manifold 1 is shown in Fig. 6. It shows a cylindrical distribution manifold 1 having two gas outlet nozzles 3 disposed at an angle to each other on the same circumference and a third gas outlet nozzle 3 disposed axially in continuation to the inflow direction, with one small fitted valve 5 each. However, three or more small gas outlet nozzles 3 may be disposed on the circumference.

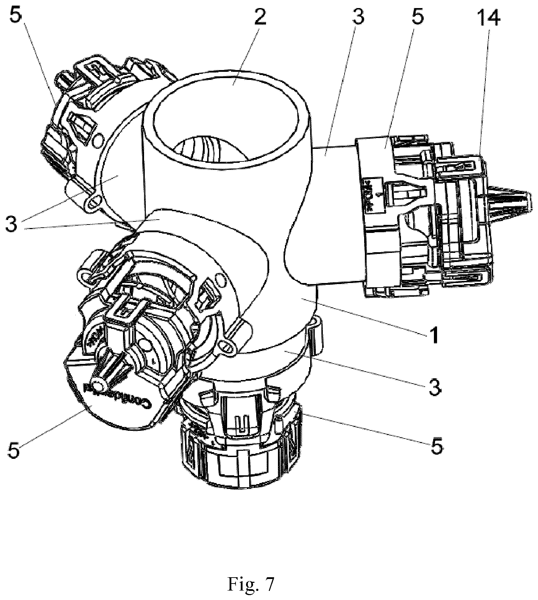

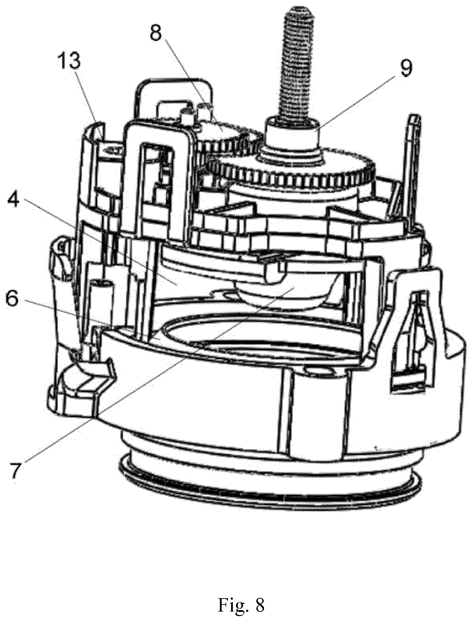

Fig. 7 shows a cylindrical distribution manifold 1 having three gas outlet nozzles 3 disposed in a star shape on the same circumference and a fourth gas outlet nozzle 3 disposed in axial continuation, each with an associated small valve 5. This figure has a reference number for valve cap 14, which is taken off in figure 8.

Fig. 8 shows a preferred embodiment of an actuatable small valve 5 which could be positioned on gas outlet nozzle 3, with no valve cap 14 fitted here. The size of gas outlet opening 4 and thus the quantitative limitation of the laterally exiting gas flow is defined by the cross-section of the opening between the valve seat of valve body 6 and the valve seat of shut-off body 7. This cross-section is smaller than in conventional larger gas shut-off valves. The spacing between the two valve seats is also smaller, so that, in parallel operation of the valves 5, the gas flow can be interrupted faster than before because the travel paths for the flowoptimized, curved, mushroom-type shut-off bodies 7 are considerable smaller than with the previously used shut-off valves.

In at least one embodiment, the shut-off body 7 is moved by means of a known nut-and-spindle drive 9. The nut-and-spindle drive 9 is driven by a reduction gear 8. A small direct-current motor as a drive is installed in a separate housing chamber and disposed laterally beside the reduction gear unit. This separate housing chamber is integrally formed peripherally vertical such that the direct-current motor can be designed to be rotationally fixed, encapsulated and, if needed, spark protected. The electrical connections of the direct-current motor are guided out of the housing chamber. The motor shaft protrudes from the housing chamber and carries a motor pinion at the end to drive the reduction gear unit 8 of spur gears. This embodiment is constructively very small.

In at least one embodiment, each valve 5 is designed such that it can be opened and closed by a shut-off body 7 actuated by a motor-driven reduction gear unit 8. Also, each valve 5 is individually electrically connected, driveable and actuatable. The essential advantage is that no electronic protection circuit is any longer needed due to the low electrical energy introduced into the explosive natural gas atmosphere (per valve 5 always less than or equal to 320 µJ for natural gas). By two or more smaller valves 5 being connected and operable in parallel, a higher total quantity of electrical energy can be introduced into the gas or explosive atmosphere because it is introduced in a quantized manner and each quantum on its own falls below the limit value. The sum of the individual electrical energies introduced through all valves 5 into the industrial gas meter 11 may therefore be larger than 320 µJ without any explosion hazard because each individual energy quantity per valve is definitely not sufficient to ignite the explosive atmosphere. The intrinsic safety of each individual valve 5 and of their associated electrical circuits is definitely ensured here.

The structure of the each valve 5 on the gas outlet nozzle 3 is same. Each valve 5 could be actuated separately. In at least one embodiment, all the valves 5 are respectively actuated, so that a same actuation circuit could be respectively connected to the valve 5, thereby uniformly controlling the action of the valves 5, so that the valves 5 can be operated in parallel. Design and installation space of the actuation circuit with control function are not increased.

Preferably, the dimensions of the gas outlet nozzles 3 are all equal. However, a special configuration of the distribution manifold is conceivable, where the dimensions of the individual gas outlet nozzles 3 are different. This demands small valves 5 of different appropriate sizes. Further, it is to be understood that, these gas outlet nozzles 3 can be arbitrarily disposed depending on the available installation space of the respective industrial gas meter 11.

Thanks to the many different embodiment variants of gas outlet nozzles 3 disposed on the basic body of the distribution manifold (including a disposition at an obtuse angle relative to the symmetry axis of the distribution manifold) made possible by this solution according to the invention, it is possible to build industrial meters in a very compact design and also to realize favourable flow behaviours inside the industrial gas meters.

The technical solution described above is primarily usable as an innovative gas shut-off valve for constructively small industrial gas meters.

The above embodiments are merely to illustrate the technical solutions of the present invention and are not intended to limit the present invention. Although the present invention has been described with reference to the above preferred embodiments, it should be appreciated by those skilled in the art that various modifications and variations may be made without departing from the scope of the present invention as defined by the appended claims.

## Claims

1. A gas meter (11) comprising a distribution manifold (1) inside the gas meter (11), the distribution manifold (1) having:
a gas inlet opening (2) of the gas meter;
at least two smaller gas outlet nozzles (3);
a valve (5) is disposed on each gas outlet nozzle (3);
wherein each valve (5) is individually electrically connected and actuatable; **characterized in that** the gas meter (11) further comprises
a gas meter outlet (12) having a flow sensor (10) inside to measure and check flow volume.

2. The gas meter (11) of claim 1, wherein each valve (5) is designed to be opened and closed by a shut-off body (7) actuated by a motor-driven reduction gear unit (8).

3. The gas meter (11) of claim 1, wherein each valve (5) is actuated separately and simultaneously so that valves (5) are in parallel operation.

4. The gas meter (11) of claim 1, wherein the distribution manifold (1) having at least two gas outlet nozzles (3) disposed on it is cuboid.

5. The gas meter (11) of claim 1, wherein the distribution manifold (1) having at least two gas outlet nozzles (3) disposed on it is cylindrical.

6. The gas meter (11) of claim 1, wherein the at least two gas outlet nozzles (3) are serially disposed on the distribution manifold (1) and pointed to one direction.

7. The gas meter (11) of claim 1, wherein the at least two gas outlet nozzles (3) are disposed on the distribution manifold (1) in a radially distributed manner.

8. The gas meter (11) of claim 1, wherein the at least two gas outlet nozzles (3) are disposed on the distribution manifold (1) at a right angle to a direction of gas inlet flow.

9. The gas meter (11) of claim 1, wherein the distribution manifold (1) is a modular construction comprising several serially disposed individual distribution manifolds connected with each other in a gastight manner, each individual distribution manifold comprises a gas outlet nozzle (3).

10. The gas meter (11) of claim 1, wherein a structure of each valve (5) on each gas outlet nozzle (3) is the same.

11. The gas meter (11) of claim 1, wherein the valves (5) on the gas outlet nozzles (3) are connected in parallel to a same actuation circuit.

## Patentansprüche

1. Gaszähler (11), umfassend
eine Verteilungsrohrverzweigung (1) innerhalb des Gaszählers (11), wobei die Verteilungsrohrverzweigung (1) aufweist:
eine Gaseinlassöffnung (2) des Gaszählers;
mindestens zwei kleinere Gasauslassdüsen (3);
ein Ventil (5), das an jeder Gasauslassdüse (3) angeordnet ist;
wobei
jedes Ventil (5) einzeln elektrisch verbunden ist und betätigt werden kann;
**dadurch gekennzeichnet, dass** der Gaszähler (11) ferner einen Gaszählerauslass (12) umfasst, der innerhalb einen Strömungssensor (10) aufweist, um das Strömungsvolumen zu messen und zu überprüfen.

2. Gaszähler (11) nach Anspruch 1, wobei jedes Ventil (5) entworfen ist, um durch einen Absperrkörper (7), der durch eine motorgetriebene Untersetzungsgetriebeeinheit (8) betätigt wird, geöffnet und geschlossen zu werden.

3. Gaszähler (11) nach Anspruch 1, wobei jedes Ventil (5) separat und gleichzeitig betätigt wird, so dass die Ventile (5) in parallelem Betrieb sind.

4. Gaszähler (11) nach Anspruch 1, wobei die Verteilungsrohrverzweigung (1), die mindestens zwei darauf angeordnete Gasauslassdüsen (3) aufweist, quaderförmig ist.

5. Gaszähler (11) nach Anspruch 1, wobei die Verteilungsrohrverzweigung (1), die mindestens zwei darauf angeordnete Gasauslassdüsen (3) aufweist, zylindrisch ist.

6. Gaszähler (11) nach Anspruch 1, wobei die mindestens zwei Gasauslassdüsen (3) an der Verteilungsrohrverzweigung (1) seriell angeordnet und in eine Richtung gerichtet sind.

7. Gaszähler (11) nach Anspruch 1, wobei die mindestens zwei Gasauslassdüsen (3) an der Verteilungsrohrverzweigung (1) auf eine radial verteilte Weise angeordnet sind.

8. Gaszähler (11) nach Anspruch 1, wobei die mindestens zwei Gasauslassdüsen (3) an der Verteilungsrohrverzweigung (1) in einem rechten Winkel zu einer Richtung der Gaseinlassströmung angeordnet sind.

9. Gaszähler (11) nach Anspruch 1, wobei die Verteilungsrohrverzweigung (1) ein modularer Aufbau ist, umfassend mehrere seriell angeordnete einzelne Verteilungsrohrverzweigungen, die auf eine gasdichte Weise miteinander verbunden sind, wobei jede einzelne Verteilungsrohrverzweigung eine Gasauslassdüse (3) umfasst.

10. Gaszähler (11) nach Anspruch 1, wobei eine Struktur jedes Ventils (5) an jeder Gasauslassdüse (3) gleich ist.

11. Gaszähler (11) nach Anspruch 1, wobei die Ventile (5) an den Gasauslassdüsen (3) mit einem gleichen Betätigungskreis parallel verbunden sind.

## Revendications

1. Compteur de gaz (11) comprenant
un collecteur de distribution (1) à l'intérieur du compteur de gaz (11), le collecteur de distribution (1) présentant :
une ouverture d'entrée de gaz (2) du compteur de gaz ;
au moins deux buses de sortie de gaz plus petites (3) ;
une soupape (5) est disposée sur chaque buse de sortie de gaz (3) ;
dans lequel
chaque soupape (5) est individuellement connectée électriquement et actionnable ;
**caractérisé en ce que** le compteur de gaz (11) comprend en outre une sortie de compteur de gaz (12) ayant un capteur de débit (10) à l'intérieur pour mesurer et vérifier le volume d'écoulement.

2. Compteur de gaz (11) selon la revendication 1, dans lequel chaque soupape (5) est conçue pour être ouverte et fermée par un corps de blocage (7) actionné par un engrenage réducteur entraîné par moteur (8).

3. Compteur de gaz (11) selon la revendication 1, dans lequel chaque soupape (5) est actionnée séparément et simultanément de sorte que les soupapes (5) sont en fonctionnement parallèle.

4. Compteur de gaz (11) selon la revendication 1, dans lequel le collecteur de distribution (1) ayant au moins deux buses de sortie de gaz (3) disposées sur celui-ci est parallélépipédique.

5. Compteur de gaz (11) selon la revendication 1, dans lequel le collecteur de distribution (1) ayant au moins deux buses de sortie de gaz (3) disposées sur celui-ci est cylindrique.

6. Compteur de gaz (11) selon la revendication 1, dans lequel les au moins deux buses de sortie de gaz (3) sont disposées en série sur le collecteur de distribution (1) et pointées vers une direction.

7. Compteur de gaz (11) selon la revendication 1, dans lequel les au moins deux buses de sortie de gaz (3) sont disposées sur le collecteur de distribution (1) d'une manière répartie radialement.

8. Compteur de gaz (11) selon la revendication 1, dans lequel les au moins deux buses de sortie de gaz (3) sont disposées sur le collecteur de distribution (1) selon un angle droit par rapport à une direction d'écoulement d'entrée de gaz.

9. Compteur de gaz (11) selon la revendication 1, dans lequel le collecteur de distribution (1) est une construction modulaire comprenant plusieurs collecteurs de distribution individuels disposés en série raccordés les uns aux autres de manière étanche aux gaz, chaque collecteur de distribution individuel comprenant une buse de sortie de gaz (3).

10. Compteur de gaz (11) selon la revendication 1, dans lequel une structure de chaque soupape (5) sur chaque buse de sortie de gaz (3) est la même.

11. Compteur de gaz (11) selon la revendication 1, dans lequel les soupapes (5) sur les buses de sortie de gaz (3) sont raccordées en parallèle à un même circuit d'actionnement.
